# FASCICULE DE BREVET EUROPEEN

(11) **EP 3 817 848 B1**
(45) Date de publication et mention de la délivrance du brevet: **23.02.2022**
(21) Numéro de dépôt: 19733030.1
(22) Date de dépôt: 25.06.2019
(51) Int. Cl.: B01J 8/00, B65B 1/04, B65B 1/06, B65G 69/04

(54) **SYSTEME DE REMPLISSAGE POUR UN RÉCIPIENT POUR PARTICULES SOLIDES**
FÜLLSYSTEM FÜR EINEN BEHÄLTER FÜR FESTPARTIKELN
FILLING SYSTEM FOR A CONTAINER FOR SOLID PARTICLES

(30) Priorité: 04.07.2018 FR 1856162
(43) Date de publication de la demande: 12.05.2021
(60) Demande divisionnaire: 21158824.9
(73) Titulaire: Crealyst-Group, 72390 Semur-en-Vallon (FR)
(72) Inventeur: POUSSIN, Bernard, 72390 Semur-en-Vallon (FR); POUSSIN, Guillaume, 78640 Saint Germain de la Grange (FR)
(74) Mandataire: LLR
(86) Numéro de dépôt international: PCT/EP2019/066840
(87) Numéro de publication internationale: WO 2020/007655

(56) Documents cités:
- EP-B1- 2 648 837
- CA-A1- 3 017 426
- FR-A1- 2 668 131
- FR-B1- 2 721 900

## Description

### DOMAINE TECHNIQUE DE L'INVENTION

La présente invention se rapporte au domaine du remplissage de récipients par des particules solides telles que des grains ou des granulés. Ces récipients peuvent être par exemple, des réacteurs pour l'industrie pétrolière ou chimique ou des silos pour le stockage des céréales, d'engrais ou de tout autre produit sous forme de particules solides.

### ARRIÈRE-PLAN TECHNIQUE DE L'INVENTION

Le remplissage de tels récipients se fait par un transvasement des particules solides à partir de trémies ou entonnoirs, qui déversent les particules solides dans le récipient par l'entremise de manches souples ou de tuyaux rigides. Généralement, on cherche à remplir le récipient avec le maximum de produit solide et à avoir une répartition des particules solides la plus homogène possible en termes de granulométrie afin de se rapprocher le plus possible du remplissage optimum déterminé théoriquement.

Ainsi, dans le cas de réacteurs chimiques notamment, il est intéressant d'avoir la masse la plus importante possible de granulés de réactif dans le réacteur afin de pouvoir espacer les arrêts de l'appareillage liés au remplacement des granulés de réactif. Il est également important d'avoir une répartition granulométrique homogène dans tout le réacteur afin d'éviter l'apparition de chemins préférentiels (zones avec moins de densité de granulés de réactif) pour les substances devant passer à travers le lit de granulés de réactif. On comprend en effet que, dans un tel cas, seule une partie des granulés de réactif est utilisée ce qui entraînerait un remplacement de tous les granulés de réactif bien qu'une partie n'ait pas été utilisée. Ces granulés de réactif ayant un coût relativement important, on comprend donc l'aspect déterminant de la répartition granulométrique homogène dans tout le réacteur.

Lors du chargement d'un tel récipient, il peut arriver que le système de remplissage subisse une obstruction partielle à cause d'éléments parasites (morceaux de plastiques résultant de l'ouverture des emballages contenant les particules solides, de détritus issus du nettoyage des trémies, etc.). Chaque obstruction perturbe la distribution du système de remplissage qui ne peut plus garantir un remplissage homogène du récipient.

Des systèmes de remplissage de récipients selon le préambule de la revendication 1 sont notamment décrits dans EP 2648837 B1, CA 3017426 A1, FR 2668131 A1 et FR 2721900 B1.

### RÉSUME DE L'INVENTION

L'invention a pour but de remédier à ces inconvénients en proposant un système de remplissage dont la distribution soit moins dépendante des éventuels éléments parasites présents avec les particules solides à répartir dans le récipient.

À cet effet, l'invention se rapporte à un système de remplissage pour un récipient destiné à stocker des particules solides comportant un dispositif de répartition des particules solides destiné à recevoir et sélectivement répartir les particules solides vers un dispositif de distribution et comprenant au moins un élément diviseur de flux de particules solides, le dispositif de distribution comportant au moins un élément d'éparpillement des particules solides destiné à remplir le récipient de manière homogène, **caractérisé en ce que** l'élément diviseur est monté rotatif autour d'un axe sensiblement parallèle au sens d'écoulement du flux de particules solides dans le dispositif de répartition afin de répartir un défaut éventuel d'écoulement des particules solides dans le dispositif de répartition.

Avantageusement selon l'invention, si une obturation partielle de l'élément diviseur se produit, le système de remplissage peut sélectivement déplacer selon une rotation l'élément diviseur afin de répartir circulairement dans le récipient le défaut induit par l'obturation si bien qu'il ne reste pas localisé. On comprend donc que cette rotation permet, au fur et à mesure du remplissage du récipient, de corriger le défaut du front supérieur de particules solides généré par l'obturation. Le système de remplissage est donc beaucoup moins sensible en cas de présence d'éléments parasites présents avec les particules solides à répartir dans le récipient.

L'invention peut également comporter l'une ou plusieurs des caractéristiques optionnelles suivantes, prises seules ou en combinaison.

Selon un premier mode de réalisation, l'élément diviseur peut être monté fou sur une couronne fixe du dispositif de répartition ce qui permet de pouvoir actionner directement l'élément diviseur sans déplacer d'autres organes.

Selon un deuxième mode de réalisation, l'élément diviseur peut être solidaire d'une couronne montée folle sur une structure fixe du dispositif de répartition ce qui permet de facilement monter des mécanismes externes pour actionner l'élément diviseur.

Quel que soit le mode de réalisation et selon une première variante, l'élément diviseur peut être couplé à un mécanisme d'entraînement afin d'être sélectivement déplacé ce qui permet de choisir le moment où l'élément diviseur est déplacé et à quelle vitesse.

Selon une version particulière de la première variante, le mécanisme d'entraînement peut être couplé au dispositif de distribution afin de rendre proportionnel le déplacement de l'élément diviseur par rapport à celui de l'élément d'éparpillement ce qui permet, par exemple, d'utiliser le moteur du dispositif de distribution pour déplacer l'élément diviseur.

Quel que soit le mode de réalisation et selon une deuxième variante, le dispositif de répartition comporte au moins un élément d'entraînement destiné à coopérer avec l'écoulement des particules solides pour déplacer l'élément diviseur ce qui évite d'avoir à ajouter un mécanisme d'entraînement.

L'élément d'éparpillement peut comporter au moins un plateau tournant muni d'ailettes de longueurs évolutives afin que la périphérie du plateau s'étende sous forme sensiblement d'au moins une spirale de manière à remplir le récipient sous forme d'une pluie homogène de particules solides.

### BRÈVE DESCRIPTION DES DESSINS

D'autres particularités et avantages de l'invention ressortiront clairement de la description qui en est faite ci-après, à titre indicatif et nullement limitatif, en référence aux dessins annexés, dans lesquels :
- La figure 1 est une vue en perspective d'un système de remplissage selon un premier mode de réalisation de l'invention ;
- La figure 2 est une vue en perspective analogue à la figure 1 dans laquelle un carter a été retiré afin de visualiser un élément diviseur du système de remplissage selon le premier mode de réalisation de l'invention ;
- La figure 3 est une vue en perspective d'un système de remplissage selon un deuxième mode de réalisation de l'invention.

### DESCRIPTION DÉTAILLÉE D'AU MOINS UN MODE DE RÉALISATION DE L'INVENTION

Sur les différentes figures, les éléments identiques ou similaires portent les mêmes références, éventuellement additionné d'un indice. La description de leur structure et de leur fonction n'est donc pas systématiquement reprise.

Dans tout ce qui suit, les orientations sont les orientations des figures. En particulier, les termes « supérieur », « inférieur », « gauche », « droit », « au-dessus », « en-dessous », « vers l'avant » et « vers l'arrière » s'entendent généralement par rapport au sens de représentation des figures.

L'invention se rapporte généralement à un système de remplissage pour un récipient tel qu'un réacteur de catalyse ou un silo de stockage destiné à stocker des particules solides comme du catalyseur sous forme de granulés ou des grains de céréales. Le système de remplissage est destiné à être monté dans la partie supérieure du récipient afin de distribuer selon une pluie homogène et régulière les particules solides permettant de remplir au fur et à mesure le récipient selon un front supérieur formant une surface sensiblement plane et horizontale. Ce type de remplissage permet en effet de maximiser la quantité de particules solides stockée dans le récipient selon une répartition très homogène mais également d'assurer la protection des particules solides notamment en évitant leur attrition génératrice de poussière.

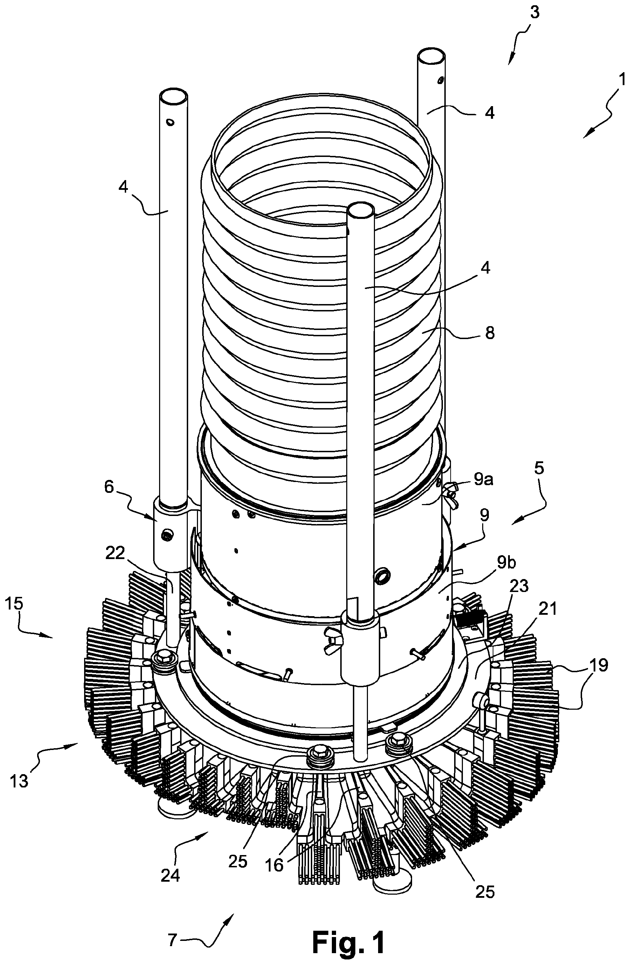

Dans les exemples illustrés aux figures 1 à 3, le système 1 de remplissage est agencé pour remplir un réacteur chimique en granulés de réactif. Bien entendu, l'invention peut être également appliquée à d'autres domaines tels que les silos de grains de céréales ou plus généralement à tout récipient de particules solides tels que des grains de plantes végétales comme des grains de café ou des granulés de bois.

Dans les exemples illustrés aux figures 1 à 3, le système 1 de remplissage est agencé pour coopérer avec un dispositif d'alimentation (non représenté) de particules solides. Typiquement, pour les réacteurs chimiques, les dispositifs d'alimentation sont généralement des convoyeurs déversant les granulés de réactif par une conduite de remplissage amenée au travers de l'ouverture supérieure du réacteur. Le système 1 de remplissage selon l'invention est donc placé en communication avec cette conduite de remplissage pour distribuer de manière homogène les granulés de réactif dans le réacteur.

Comme visible à la figure 1, le système 1 de remplissage comporte un dispositif 3 de fixation, un dispositif 5 de répartition et un dispositif 7 de distribution des particules solides. Le dispositif 3 de fixation comporte principalement au moins deux bras 4 (trois à la figure 1) destinés à supporter le système 1 de remplissage dans le réacteur et à être fixé chacun sur au moins une partie du réacteur.

Le dispositif 5 de répartition est destiné à recevoir et sélectivement répartir les particules solides venant de la conduite de remplissage vers le dispositif 7 de distribution. À cet effet, le dispositif 5 de répartition comprend un tube 8 flexible prolongé par un carter 9. Comme visible à la figure 1, le tube 8 flexible est destiné à recevoir, par exemple par emmanchement, la conduite de remplissage afin de canaliser les granulés de réactif de la conduite de remplissage vers le carter 9 et notamment vers au moins un élément 11 diviseur de flux de particules solides. Le tube 8 flexible n'est pas un élément essentiel de l'invention. Ainsi, il pourrait être enlevé ou remplacé par un autre type d'organe d'acheminement.

Le carter 9 comporte une partie 9a supérieure et une partie 9b inférieure essentiellement tubulaires et destinées principalement à guider les particules solides vers chaque élément 11 diviseur situé à l'intérieur au niveau de l'extrémité basse de la partie 9b inférieure. La partie 9a supérieure reçoit en outre un mécanisme d'entraînement du dispositif 7 de distribution. Ce dernier est rendu solidaire du dispositif 3 de fixation par un châssis 6 reliant ses trois bras 4 en passant à travers la partie 9a supérieure du dispositif 5 de répartition.

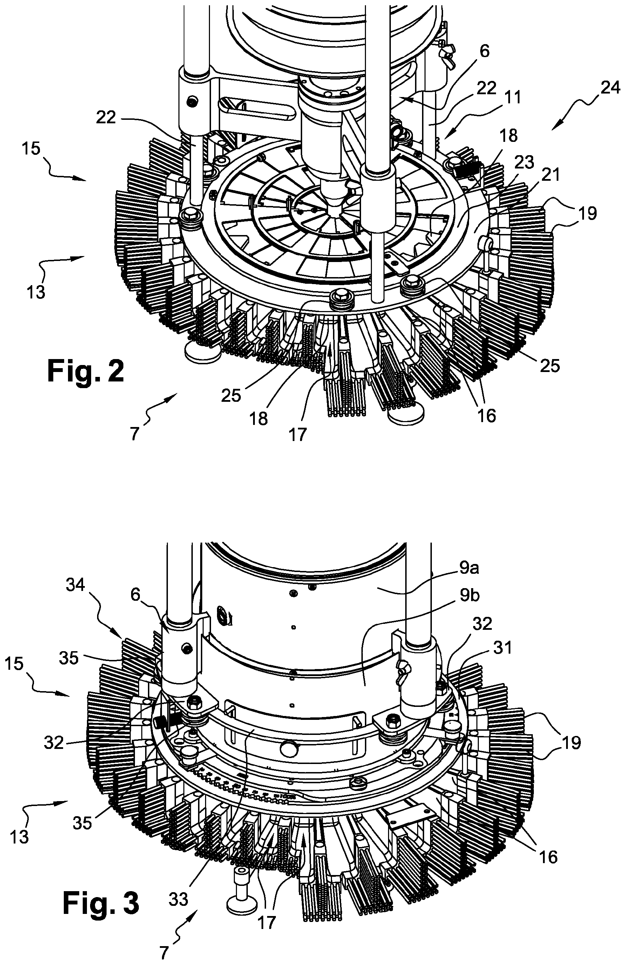

L'élément 11 diviseur peut être de différents types. Dans les exemples illustrés aux figures 1 à 3, l'invention peut, par exemple, utiliser un élément 11 diviseur du type décrit dans le document EP 2 648 837.
Plus précisément, comme visible dans l'exemple de la figure 2, l'élément 11 diviseur peut ainsi être un mécanisme à diaphragme comprenant une pluralité de volets d'obturation, fermant chacun un secteur angulaire du fond du carter 9. Plus précisément, le mécanisme à diaphragme comporte des moyens de commande du déplacement des volets d'obturation, configurés pour pouvoir obturer partiellement un secteur angulaire indépendamment des autres secteurs angulaires.

Selon cet exemple d'élément 11 diviseur, on obtient un remplissage d'un récipient avec des particules solides, quelle que soit la taille des particules. Chaque secteur annulaire peut également comprendre une pluralité de volets d'obturation, typiquement au moins deux, recouvrant chacun un même secteur angulaire d'obturation. En déplaçant ces volets les uns par rapport aux autres, pour un même secteur annulaire, on modifie l'ouverture du secteur angulaire par laquelle les particules solides peuvent passer, de façon à obturer au moins partiellement le secteur. On comprend que l'obturation d'un secteur angulaire peut être totale.

En contrôlant séparément le débit dans chaque secteur angulaire, on peut moduler de façon souple la répartition des particules solides vers le dispositif 7 de distribution et ainsi éviter des effets de bouchage de ces secteurs. On comprend alors que chaque secteur angulaire offre sélectivement une ouverture axiale vers le dispositif 7 de distribution.

Bien entendu, d'autres types d'élément 11 diviseur sont envisageables en addition ou en remplacement du mécanisme à diaphragme du type décrit dans le document EP 2 648 837 sans sortir du cadre de l'invention. À titre nullement limitatif, des cylindres concentriques aménagés dans le carter 9 pourraient, par exemple, également diviser le flux de particules solides en addition ou en remplacement du mécanisme à diaphragme du type décrit dans le document EP 2 648 837. De plus, l'ouverture de l'élément 11 diviseur pourrait, en addition ou en remplacement, offrir au moins une ouverture radiale (c'est-à-dire sensiblement perpendiculaire à l'ouverture axiale) et/ou oblique (c'est-à-dire orienté entre l'orientation axiale et l'orientation radiale) vers le dispositif 7 de distribution.

Le dispositif 7 de distribution peut être de différents types. Il comporte au moins un élément 13 d'éparpillement destiné à remplir de particules solides le récipient de manière homogène et, préférentiellement, sous forme de pluie homogène de particules solides. Le dispositif 7 de distribution peut comporter entre un et vingt éléments 13 d'éparpillement et, de préférence, entre deux et cinq. À titre nullement limitatif, plusieurs éléments 13 d'éparpillement (trois aux figures 1 à 3 dont un seul est principalement visible) peuvent comporter chacun, comme illustré aux figures 1 à 3, un plateau 15 tournant muni d'ailettes 16 permettant d'éjecter, par force centrifuge, les particules solides selon une répartition homogène. Comme visible aux figures 1 à 3, les ailettes 16 comportent préférentiellement des longueurs évolutives afin que la périphérie de son plateau 15 associé s'étende sous forme sensiblement d'une spirale ou de plusieurs spirales (deux à aux figures 1 à 3) de manière à éjecter les particules solides selon plusieurs rayons aptes à créer la distribution sous forme de pluie homogène.

De plus, chaque canal 17 formé entre deux ailettes 16 comporte, préférentiellement, une pente 18 à l'aplomb d'un (ou plusieurs) secteur(s) angulaire(s) de l'élément 11 diviseur afin de modifier le flux sensiblement axial des particules solides sortant de l'élément 11 diviseur en un flux sensiblement radial vers les extrémités des ailettes 16. L'orientation axiale en position d'utilisation du système 1 de remplissage correspond sensiblement à celle de l'action de la gravité.

Enfin, de manière préférée, les ailettes 16 comportent, à leur périphérie, des brosses 19 comportant des séries de poils souples et flexibles avec des longueurs évolutives de manière similaire aux ailettes 16. Les poils des brosses 19 peuvent être de géométries diverses. Ils sont préférentiellement prismatiques et/ou coniques et/ou tronconiques, c'est-à-dire chaque poil ou les poils entre eux, et selon une section circulaire ou polygonale.

Dans les exemples illustrés aux figures 1 à 3, chaque brosse 19 en prolongement de l'extrémité d'une ailette 16 comporte une surface en projection en forme de T inversé « ┴ ». Plus précisément, une première série supérieure de poils est sensiblement verticale et rejoint une deuxième série inférieure de poils sensiblement horizontale au niveau médian de cette dernière. Ces poils ont pour caractéristiques d'être souples et lisses afin de protéger les particules solides entre elles. Lorsque les particules solides sont dispersées, les poils sont agencés pour se déformer élastiquement au passage des particules solides puis restituer cette énergie absorbée pour orienter l'éjection finale vers le récipient des particules solides.

Selon une variante préférée, la deuxième série inférieure de poils s'étend, à partir de l'extrémité de chaque ailette 16, selon une direction oblique par rapport à l'axe horizontal. Plus précisément, la deuxième série s'étend en remontant par rapport à l'axe horizontal, à partir de l'extrémité de chaque ailette 16, de sorte à ce qu'au moins les extrémités libres de la deuxième série de poils se trouvent sur le trajet des particules solides débouchant de son canal 17 associé. La pente par rapport à l'axe horizontal de tout ou partie de la deuxième série peut ainsi être comprise entre 5 et 10 degrés et, de manière préférée, autour de 7 degrés. De manière avantageuse, cette pente permet de lâcher les particules solides du dispositif 7 de distribution, au niveau des extrémités libres de la deuxième série de poils, selon une hauteur plus élevée que la sortie des canaux 17 sans trop les freiner afin qu'elles soient distribuées plus loin radialement dans le récipient.

Bien entendu, d'autres dispositifs 7 de distribution peuvent être utilisés comme par exemple du type à lanière ou du type à fouet.

Lors du chargement d'un tel récipient, il peut arriver que le système 1 de remplissage subisse une obstruction partielle dans le carter 9 comme au niveau de l'élément 11 diviseur à cause d'éléments parasites (morceaux de plastiques résultant de l'ouverture des emballages contenant les particules solides, de détritus issus du nettoyage des trémies, etc.). Chaque obstruction perturbe la distribution du système 1 de remplissage qui ne peut plus garantir un remplissage homogène du récipient.

Avantageusement selon l'invention, l'élément 11 diviseur est monté rotatif autour d'un axe sensiblement parallèle au sens d'écoulement du flux de particules solides afin de répartir un défaut éventuel d'écoulement des particules solides dans le dispositif 7 de répartition. Ainsi, par exemple, si une obturation partielle de l'élément 11 diviseur se produit, le système 1 de remplissage peut sélectivement déplacer selon une rotation l'élément 11 diviseur afin de répartir circulairement dans le récipient le défaut induit par l'obturation si bien qu'il ne reste pas localisé. On comprend donc que cette rotation permet, au fur et à mesure du remplissage du récipient, de corriger le défaut généré par l'obturation sur le front supérieur de particules solides dans le récipient. Le système 1 de remplissage est donc beaucoup moins sensible en cas de présence d'éléments parasites mélangés avec les particules solides à répartir dans le récipient.

Selon un premier mode de réalisation illustré aux figures 1 et 2, l'élément 11 diviseur est monté fou sur une couronne 21 fixe, c'est-à-dire libre en rotation par rapport à la couronne 21 fixe, du dispositif 5 de répartition. Ce mode de réalisation permet ainsi de pouvoir actionner directement l'élément 11 diviseur sans déplacer d'autres organes. Dans l'exemple illustré à la figure 2, on peut voir que la couronne 21 fixe est montée sur dispositif 5 de répartition par trois barres 22 attachées au châssis 6. La couronne 21 fixe coopère avec l'élément 11 diviseur à l'aide d'un ensemble 24 de déplacement relatif. Ce dernier, dans l'exemple illustré aux figures 1 et 2, comporte principalement une came 23 annulaire solidaire de l'élément 11 diviseur et plusieurs galets 25 montés pivotant sur la couronne 21 fixe. La surface périphérique de la came 23 annulaire est donc capable de rouler contre les gorges ménagées dans la surface périphérique de chaque galet 25 afin d'entraîner en rotation l'ensemble de (ou des) l'élément(s) 11 diviseur.

Dans l'exemple illustré aux figures 1 et 2, l'ensemble 24 de déplacement relatif comporte un galet 25 de part et d'autre de chaque barre 22, c'est-à-dire comporte six galets 25 au total. Bien entendu, l'ensemble 24 de déplacement relatif pourrait comporter d'autres types de galets 25 et/ou un nombre différent de galets 25. De même, l'ensemble 24 de déplacement relatif pourrait être inversé, c'est-à-dire que la couronne 21 fixe pourrait porter la came 23 annulaire et, l'élément 11 diviseur, les galets 25, sans sortir du cadre de l'invention. Enfin, l'ensemble 24 de déplacement relatif ne saurait se limiter à des couples came 23 - galets 25. Ainsi, à titre nullement limitatif, l'ensemble 24 de déplacement relatif pourrait être du type à roulement, comme par exemple à bille, sans sortir du cadre de l'invention.

Selon un deuxième mode de réalisation illustré à la figure 3, l'élément 11 diviseur est solidaire d'une couronne 31 montée folle sur une structure fixe du dispositif 5 de répartition. Ce mode de réalisation permet ainsi de facilement monter des mécanismes externes pour actionner l'élément 11 diviseur.

Dans l'exemple illustré à la figure 3, on peut voir que la couronne 31 est montée dessous et en saillie de la périphérie de l'élément 11 diviseur de manière à que ce dernier 11 soit solidaire en mouvement avec cette première 31. Par ailleurs, dans l'exemple illustré à la figure 3, l'élément 11 diviseur est solidaire de la partie 9b inférieure du carter 9. De plus, la partie 9b inférieure coopère avec le reste des parties (fixes) du dispositif 5 de répartition à l'aide d'un ensemble 34 de déplacement relatif. Ce dernier 34, dans l'exemple illustré à la figure 3, comporte principalement une came 33 annulaire solidaire de la partie périphérique de la partie 9b inférieure et plusieurs galets 35 montés pivotant sur des portées 32 fixés au châssis 6.

La surface périphérique de la came 33 annulaire est donc capable de rouler contre les gorges ménagées dans la surface périphérique de chaque galet 35 afin d'entraîner en rotation l'ensemble comportant ledit au moins élément 11 diviseur, la couronne 31 folle et la partie 9b inférieure du carter 9 par rapport au reste des pièces du dispositif 5 de répartition.

Dans l'exemple illustré à la figure 3, l'ensemble 34 de déplacement relatif comporte deux galets 35 sur chaque portée 32, c'est-à-dire comporte six galets 35 au total. Bien entendu, l'ensemble 34 de déplacement relatif pourrait comporter d'autres types de galets 35 et/ou un nombre différent de galets 35. De même, l'ensemble 34 de déplacement relatif pourrait être inversé, c'est-à-dire que les portées 32 pourrait porter la came 33 annulaire et, la partie 9b inférieure, les galets 35, sans sortir du cadre de l'invention. Enfin, l'ensemble 34 de déplacement relatif ne saurait se limiter à des couples came 33 - galets 35. Ainsi, à titre nullement limitatif, l'ensemble 34 de déplacement relatif pourrait être du type à roulement, comme par exemple à bille, sans sortir du cadre de l'invention.

Quel que soit le mode de réalisation et selon une première variante, l'élément 11 diviseur peut être couplé à un mécanisme d'entraînement afin d'être sélectivement déplacé. Cela permet notamment de pouvoir piloter le déplacement (début, vitesse, arrêt, etc.) en fonction des conditions de fonctionnement du système 1 de remplissage. À titre nullement limitatif, il est par exemple possible d'utiliser un mécanisme d'entraînement du type électrique (non représenté). Le mécanisme d'entraînement peut ainsi comporter principalement une roue dentée solidaire de la couronne 21 fixe ou de la couronne 31 folle, un rouage réducteur et un ensemble moteur. Par conséquent, on comprend que la rotation de l'élément 11 diviseur peut être actionnée sans la présence obligatoire d'un opérateur. À titre d'exemple, l'activation de la rotation de l'élément 11 diviseur pourrait être asservie à l'activation du dispositif d'alimentation (non représenté) ou la présence de particules solides dans le carter 9.

Selon une version particulière de la première variante, le mécanisme d'entraînement est couplé au dispositif 7 de distribution afin de rendre proportionnel le déplacement de l'élément diviseur par rapport à celui de l'élément d'éparpillement ce qui permet, par exemple, d'utiliser le moteur du dispositif 7 de distribution pour déplacer l'élément 11 diviseur. Ainsi, à titre nullement limitatif, le rouage réducteur expliqué ci-dessus pourrait être couplé au moteur du dispositif 7 de distribution ou à un arbre de transmission du moteur comme, par exemple, celui de l'élément 13 d'éparpillement. Typiquement, l'élément 11 diviseur pourrait tourner entre deux et quatre cents fois moins vite que le plateau 15, et, préférentiellement, entre dix et deux cents fois moins vite. Toutefois, rien n'empêche à l'inverse que l'élément 11 diviseur tourne à la même vitesse ou plus vite que l'élément 13 d'éparpillement.

Quel que soit le mode de réalisation et selon une deuxième variante, le dispositif 5 de répartition comporte au moins un élément d'entraînement (non représenté) destiné à coopérer avec l'écoulement des particules solides pour déplacer l'élément 11 diviseur. Cela permet notamment de pouvoir absorber une partie de l'énergie du déplacement des particules solides afin de ne pas avoir à ajouter de mécanisme d'entraînement au système 1 de remplissage comme dans la première variante. À titre d'exemple, l'élément d'entraînement pourrait être formé par une nervure courbe ou rectiligne montée en amont de l'élément 11 diviseur ou sur la paroi interne de la partie 9b inférieure afin que la butée d'une partie du déplacement axiale des particules solides contre ces nervures induise une rotation de l'élément 11 diviseur. On comprend donc que la rotation de l'élément 11 diviseur serait dépendante du débit de particules solides arrivant dans le carter 9.

L'invention n'est pas limitée aux modes de réalisation et variantes présentés et d'autres modes de réalisation et variantes apparaîtront clairement à l'homme du métier. L'invention ne saurait se limiter aux applications décrites ci-dessus mais peut s'appliquer à tout type de remplissage de particules solides d'un récipient.

En outre, bien qu'il soit proposé des déplacements automatisables de l'élément 11 diviseur, l'invention se rapporte principalement au montage rotatif de l'élément 11 diviseur qui peut, bien évidemment, être également déplacé manuellement par un opérateur directement (préhension directe) ou indirectement (utilisation d'un outil ou d'une commande).

Il peut également être envisagé que le système 1 de remplissage comporte plusieurs éléments 11 diviseur de forme identique ou non montés par exemple coaxialement afin d'optimiser la répartition des particules solides.

De manière additionnelle, il peut également être envisagé que le système 1 de remplissage comporte plusieurs dispositifs 7 de distribution de géométrie identique ou non montés par exemple coaxialement afin d'optimiser la distribution des particules solides.

## Revendications

1. Système (1) de remplissage pour un récipient destiné à stocker des particules solides comportant un dispositif (5) de répartition des particules solides destiné à recevoir et sélectivement répartir les particules solides vers un dispositif (7) de distribution et comprenant au moins un élément (11) diviseur de flux de particules solides, le dispositif (7) de distribution comportant au moins un élément (13) d'éparpillement des particules solides destiné à remplir le récipient de manière homogène, **caractérisé en ce que** l'élément (11) diviseur est monté rotatif autour d'un axe sensiblement parallèle au sens d'écoulement du flux de particules solides dans le dispositif (5) de répartition afin de répartir un défaut éventuel d'écoulement des particules solides dans le dispositif (5) de répartition.

2. Système (1) de remplissage selon la revendication précédente, dans lequel l'élément (11) diviseur est monté fou sur une couronne (21) fixe du dispositif (5) de répartition.

3. Système (1) de remplissage selon la revendication 1, dans lequel l'élément (11) diviseur est solidaire d'une couronne (31) montée folle sur une structure fixe du dispositif (5) de répartition.

4. Système (1) de remplissage selon l'une quelconque des revendications précédentes, dans lequel l'élément (11) diviseur est couplé à un mécanisme d'entraînement afin d'être sélectivement déplacé.

5. Système (1) de remplissage selon la revendication précédente, dans lequel le mécanisme d'entraînement est couplé au dispositif (7) de distribution afin de rendre proportionnel le déplacement de l'élément (11) diviseur par rapport à celui de l'élément (13) d'éparpillement.

6. Système (1) de remplissage selon l'une quelconque des revendications 1 à 3, dans lequel le dispositif (5) de répartition comporte au moins un élément d'entraînement destiné à coopérer avec l'écoulement des particules solides pour déplacer l'élément (11) diviseur.

7. Système (1) de remplissage selon l'une quelconque des revendications précédentes, dans lequel l'élément (13) d'éparpillement comporte au moins un plateau (15) tournant muni d'ailettes (16) des longueurs évolutives afin que la périphérie du plateau (15) s'étende sous forme sensiblement d'au moins une spirale de manière à remplir le récipient sous forme d'une pluie homogène de particules solides.

## Patentansprüche

1. Füllsystem (1) für einen Behälter zum Bevorraten von Festpartikeln, aufweisend eine Vorrichtung (5) zum Verteilen der Festpartikel, die dazu bestimmt ist, die Festpartikel aufzunehmen und zu einer Ausgabevorrichtung (7) hin selektiv zu verteilen, und aufweisend wenigstens ein Element (11) zum Teilen des Festpartikelstroms, wobei die Ausgabevorrichtung (7) wenigstens ein Element (13) zum Verstreuen der Festpartikel aufweist, das dazu bestimmt ist, den Behälter gleichmäßig zu befüllen, **dadurch gekennzeichnet, dass** das Teilerelement (11) um eine zu der Strömungsrichtung des Festpartikelstroms im Wesentlichen parallele Achse herum drehbar in der Verteilungsvorrichtung (5) gelagert ist, um einen etwaigen Strömungsfehler der Festpartikel in der Verteilungsvorrichtung (5) zu verteilen.

2. Füllsystem (1) nach dem vorhergehenden Anspruch, wobei das Teilerelement (11) freibeweglich auf einem feststehenden Kranz (21) der Verteilungsvorrichtung (5) gelagert ist.

3. Füllsystem (1) nach Anspruch 1, wobei das Teilerelement (11) fest mit einem Kranz (31) verbunden ist, der freibeweglich auf einer feststehenden Struktur der Verteilungsvorrichtung (5) gelagert ist.

4. Füllsystem (1) nach einem der vorhergehenden Ansprüche, wobei das Teilerelement (11) mit einem Antriebsmechanismus gekoppelt ist, um selektiv bewegt zu werden.

5. Füllsystem (1) nach dem vorhergehenden Anspruch, wobei der Antriebsmechanismus mit der Ausgabevorrichtung (7) gekoppelt ist, um zu bewirken, dass die Bewegung des Teilerelements (11) zu der des Verstreuungselement (13) proportional ist.

6. Füllsystem (1) nach einem der Ansprüche 1 bis 3, wobei die Verteilungsvorrichtung (5) wenigstens ein Antriebselement aufweist, das dazu bestimmt ist, mit der Strömung der Festpartikel zusammenzuwirken, um das Teilerelement (11) zu bewegen.

7. Füllsystem (1) nach einem der vorhergehenden Ansprüche, wobei das Verstreuungselement (13) wenigstens eine Drehplatte (15) aufweist, die mit Flügeln (16) evolutiver Länge versehen ist, so dass sich der Umfang der Platte (15) in Form im Wesentlichen wenigstens einer Spirale erstreckt, um den Behälter in Form eines gleichmäßigen Festpartikelregens zu befüllen.

## Claims

1. Filling system (1) for a container for storing solid particles, comprising a distribution device (5) for solid particles for receiving and selectively distributing the solid particles towards a dispensing device (7), and comprising at least one divider element (11) dividing streams of solid particles, the dispensing device (7) comprising at least one scattering element (13) for homogeneously filling the container with solid particles, **characterized in that** the divider element (11) is rotatably mounted about an axis substantially parallel to the direction of flow of the stream of solid particles in the distribution device (5) in order to allocate any defect in the flow of the solid particles in the distribution device (5).

2. Filling system (1) according to the preceding claim, wherein the divider element (11) is mounted idle on a fixed ring (21) of the distribution device (5).

3. Filling system (1) according to claim 1, wherein the divider element (11) is secured to a ring (31) mounted idle on a fixed structure of the distribution device (5).

4. Filling system (1) according to any one of the preceding claims, wherein the divider element (11) is coupled to a drive mechanism so as to be selectively displaced.

5. Filling system (1) according to the preceding claim, wherein the drive mechanism is coupled to the dispensing device (7) in order to make the displacement of the divider element (11) proportional to that of the scattering element (13).

6. Filling system (1) according to any one of claims 1 to 3, wherein the distribution device (5) comprises at least one drive element which is intended to cooperate with the flow of solid particles in order to displace the divider element (11).

7. Filling system (1) according to any one of the preceding claims, wherein the scattering element (13) comprises at least one rotating plate (15) provided with fins (16) of varying lengths so that the periphery of the plate (15) extends substantially in the form of at least one spiral so as to fill the container in the form of a homogeneous rain of solid particles.
